**Europäisches Patentamt**

**European Patent Office**

**Office européen des brevets**

(19)

(11) Veröffentlichungsnummer: **0 160 987**
**B1**

(12) **EUROPÄISCHE PATENTSCHRIFT**

(45) Veröffentlichungstag der Patentschrift:
**12.10.88**

(51) Int. Cl.⁴: **B 23 H 7/04,** B 23 H 1/04

(21) Anmeldenummer: **85105665.5**

(22) Anmeldetag: **09.05.85**

(54) **Verfahren und Vorrichtung zur elektroerosiven Bearbeitung von Werkstücken.**

(30) Priorität: **11.05.84 CH 2351/84**
**28.05.84 DE 3419943**

(43) Veröffentlichungstag der Anmeldung:
**13.11.85 Patentblatt 85/46**

(45) Bekanntmachung des Hinweises auf die Patenterteilung:
**12.10.88 Patentblatt 88/41**

(84) Benannte Vertragsstaaten:
**CH DE FR GB IT LI LU SE**

(56) Entgegenhaltungen:
**CH-A-495 812**
**DE-A-2 908 696**
**DE-A-2 909 073**
**DE-A-2 929 454**
**DE-A-3 005 073**

(73) Patentinhaber: **AG für industrielle Elektronik AGIE Losone bei Locarno, CH- 6616 Losone/Locarno (CH)**

(72) Erfinder: **Kilcher, Beat, Via Ronco 13, CH- 6611 Arcegno (CH)**
Erfinder: **Bühler, Ernst, Salita degli Orti 5, CH- 6616 Losone (CH)**

(74) Vertreter: **EGLI- EUROPEAN PATENT ATTORNEYS, Widenmayerstrasse 5, D-8000 München 22 (DE)**

## Beschreibung

Die Erfindung betrifft ein Verfahren zur Erzeugung einer elektroerosiven Entladespannung am Arbeitsspalt einer Drahtschneidmaschine gemäß dem Oberbegriff des Patentanspruchs 1 sowie eine elektroerosive Drahtschneidmaschine gemäß dem Oberbegriff des Patentanspruchs 4.

Funkenerosive Bearbeitungsverfahren, insbesondere funkenerosive Schneidverfahren, beruhen weitgehend auf empirischen Kenntnissen und Hypothesen, da bisher keine schlüssige physikalische Beschreibung der Entladevorgänge im Bearbeitungsspalt vorliegt. Bei den Schneidvorgängen mit einer Draht- oder Bandelektrode wirken sich beispielsweise außer der Schwerkraft auch Schwingungen erschwerend aus, die aufgrund elektromagnetischer, elektrostatischer sowie mechanischer oder hydraulischer Effekte entstehen können. Im Hinblick auf solche Schwingungen sowie auf die von der Praxis vorwiegend verlangten Schlicht-Arbeitsbedingungen, welche Entladungen sehr kurzer Dauer, nämlich im Mikrosekundenbereich, und Frequenzen im Bereich von ca. 100 kHz bis ca. 500 kHz verlangen, werden an die verwendeten Generatoren besonders hohe Anforderungen gestellt. Trotz der kurzen Entladedauer müssen solche Generatoren Ströme im Bereich um 200 Ampere liefern können. Die zeitliche Steuerung der Entladevorgänge erfolgt bis heute im wesentlichen durch gesteuertes Ein- oder Ausschalten des Generators.

Bekannte Impulsgeneratoren, z. B. gemäß DE-PS-2 908 696 oder DE-PS-2 909 073, sehen im Hinblick auf eine möglichst ungestörte Aufrechterhaltung des Erosionsvorganges vor, den Entladevorgang zu unterbrechen, sobald Prozeßentartungen auftreten oder der Elektrodenverschleiß einen Grenzwert überschreitet. Im Bemühen, die Energieverteilung einer Entladung zu steuern, ist es beispielsweise gemäß der CH-PS-495 812 bekannt, geformte Impulse durch additive zeitverschobene Überlagerung von Impulsen aus einzelnen Arbeitskreisen zu gewinnen. Solche Generatoren sind jedoch nur für Impulse relativ langer Dauer geeignet.

Das gattungsgemäße Verfahren und die gattungsgemäße Vorrichtung gehen i.w. von der DE-A-3 005 073 aus. Bei dem aus dieser Druckschrift bekannten Verfahren beziehungsweise bei der zugeordneten Drahtschneidmaschine wird ein Speicherkondensator über einen Entladungsschalter, der von einem Impulsgeber beaufschlagt wird, gesteuert entladen. Die Einwirkung des Impulsgebers auf den Entladeschalter legt daher die grundsätzliche Form des Verlaufs der Entladespannung am Arbeitsspalt der Drahtschneidmaschine fest. Ein weiterer Impulsgeber, der ebenso wie der beschriebene Impulsgeber an ein UND-Gatter angeschlossen ist, moduliert die Entladespannung mit Einzelimpulsen.

Es ist Aufgabe der vorliegenden Erfindung, das gattungsgemäße Verfahren und die gattungsgemäße Vorrichtung hinsichtlich der Einstellbarkeit wählbarer Impulsformen für den Entladestrom weiter zu entwickeln.

Diese Aufgabe wird erfindungsgemäß durch die Gegenstände der Patentansprüche 1 beziehungsweise 4 gelöst.

Die Erfindung ermöglicht es, auch für kurze Impulse gewünschte Formen einstellen zu können. Hinzu kommt der weitere Vorteil, daß durch Verteilung der für eine Einzelentladung aufgewendeten Energie eine Steigerung des spezifischen Abtrags bzw. der Abtragsleistung erreicht und in der Summe aller in dichter Folge aufeinanderfolgender Entladungen die Schnittgeschwindigkeit wesentlich gesteigert wird. Ferner wird die Kraftwirkung auf die Elektrode verringert, so daß die Prozeßsteuerung effizienter gestaltet werden kann, insbesondere die Drahtelektrodenauslenkungen kleiner - und daraus folgend auch die Konturfehler kleiner - werden. Auch läßt sich eine hervorragende, gleichmäßige Oberflächenqualität des bearbeiteten Werkstücks trotz hoher Abtragsleistung und damit hoher Schnittgeschwindigkeit einhalten und der Erosionsvorgang gut steuern.

Im folgenden verden bevorzugte Ausführungsbeispiele der Erfindung anhand der Zeichnung näher erläutert. Es zeigen:

Fig. 1 eine schematische Blockdarstellung eines als Beispiel beschriebenen Impulsgenerators,
Fig. 2a) bis d) ein schematisches Zeitdiagramm für Impulsfolgen am Generator nach Fig. 1.
Fig. 3 ein Ausführungsbeispiel einer Impulsfolge gemäß Fig. 2c), und
Fig. 4 Oszillogramme eines bevorzugten Ausführungsbeispiels einer Entladespannung.

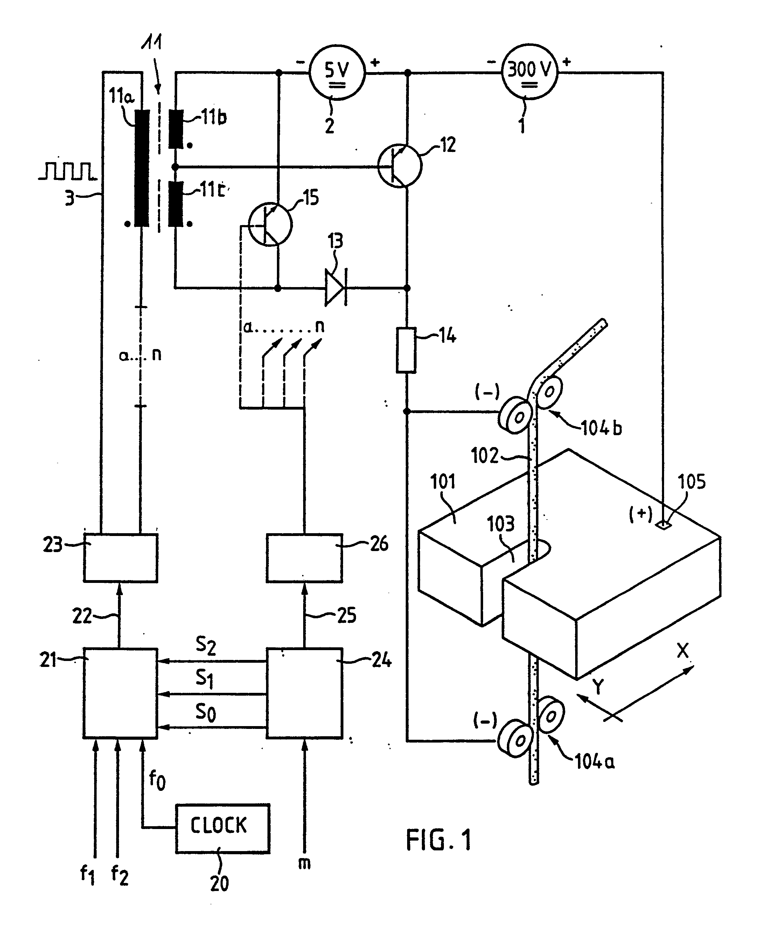

Gemäß Fig. 1 ist an einem Werkstück 101 mit Hilfe einer Drahtelektrode 102 ein Bearbeitungspalt 103 geschnitten. Die Drahtelektrode 102 ist zwischen einem unteren Drahtführungs-Organ 104a und einem oberen Drahtführungsorgan 104b geführt. Gesteuert wird der Verlauf der Schnittkurve durch eine schematisch angedeutete X-Y-Koordinatensteuerung durch eine beliebige andere Steuereinrichtung, vorzugsweise eine NC-Steuerung.

An einer Anschlußstelle 105 des Werkstücks 101 ist der Pluspol + des Impulsgenerators angeschlossen, während der Minuspol - im Bereich der oberen und unteren Drahtführungen 104a bzw. 104b an die Drahtelektrode 102 geführt ist.

Der Impulsgenerator enthält eine Basisstromquelle 1, eine Spannungsquelle 2, sowie einen Impulsübertrager 11, an dessen

Primärseite 11a Steuersignale 3 angelegt werden und dessen Sekundärseiten 11b und 11c mit elektronischen Schaltern, hier den mit Schalttransistoren 12 bzw. 15, sowie mit einer Diode 13 in Verbindung stehen. Über einen Strombegrenzungswiderstand 14 erfolgt der Anschluß des Impulsgenerators an die Drahtelektrode 102.

Vorgegeben durch die Spannungsquelle 2 liegt an der Basis-Emitter-Strecke des Schalttransistors 12 eine definierte Gleichspannung von beispielsweise 5 Volt, so daß der Schalttransistor 12 dadurch gesperrt ist. Durch Ansteuerung der Primärseite 11a des Impulsübertragers 11 mit den Stuersignalen 3, die im dargestellten Beispiel aus einer Impulsfolge bestehen, verden in den beiden Sekundärwicklungen 11b und 11c des Impulsübertragers 11 entsprechende sekundäre Steuerspannungen erzeugt. Durch die an der Sekundärwicklung 11c entstehende Steuerspannung wird der Schalttransistor 12 geöffnet, während die in der zweiten Sekundärwicklung 11c erzeugte Steuerspannung zusätzlich über die Diode 13 eine Sättigung des Schalttransistors 12 verhindert und dadurch ein schnelles Schalten desselben bewirkt.

Der Impulsübertrager 11 ist so bemessen und geschaltet, daß er bei diesen Vorgängen immer im ungesättigten Bereich arbeitet. Damit wird im Moment des Abschaltens der Steuersignale 3 der Schalttransistor 12 durch die Wirkung der Spannungsquelle 2 besonders schnell wieder in den Sperrzustand gebracht. Der zweite Schalttransistor 15 dient zum Kurzschließen der beiden Sekundärseiten 11b und 11c des Impulsübertragers 11, um damit jede weitere Schaltwirkung am Schalttransistor 12 zu blockieren.

In der praktischen Ausführung sind mehrere (1...n) solcher Leistungsschaltkreise, bestehend aus dem Impulsübertrager 11, den gesteuerten Schaltern, hier den Schalttransistoren 12 und 15, der Basisstromquelle 1, der Spannungsquelle 2 sowie der Diode 13, parallel geschaltet, welche alle durch entsprechende Steuersignale 3 auf die im folgenden beschriebene Weise angesteuert werden.

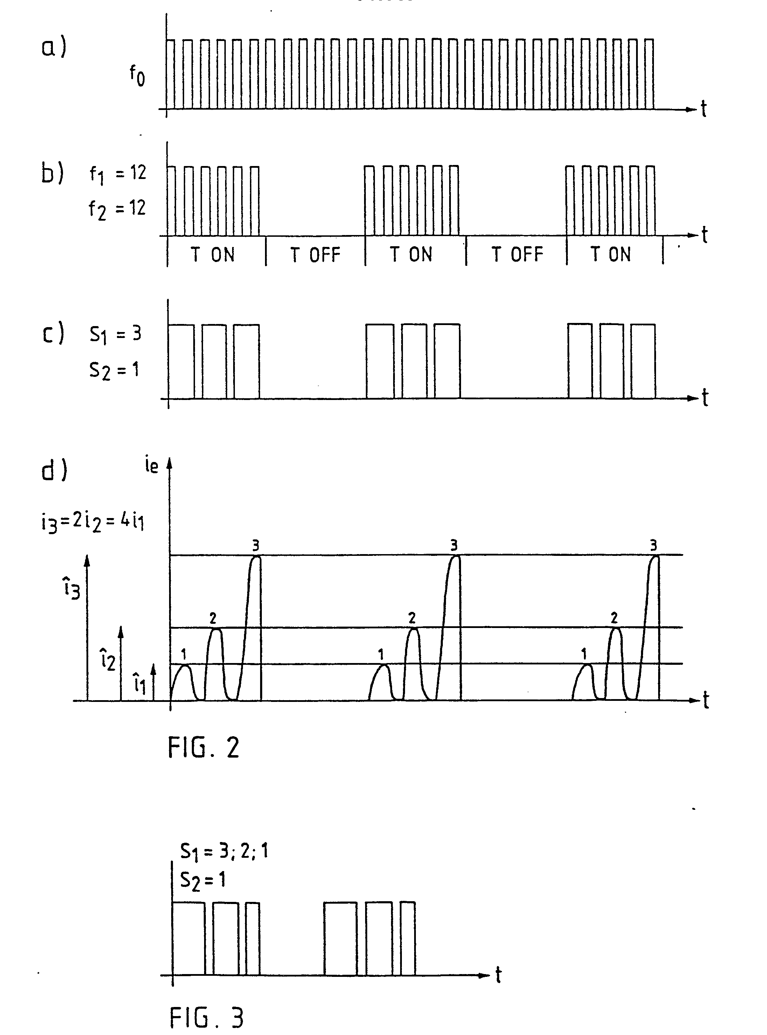

Zur Ansteuerung der oben beschriebenen Leistungsschaltkreise wird von einem hochfrequenten Taktgenerator 20 ein impulsförmiger Grundtakt mit einer Impulsfolgefrequenz von beispielsweise 5 MHz über eine Taktleitung $f_0$ an einen Impulsauswerter 21 geliefert. Eine solche Impulsfolge ist beispielsweise in Fig. 2a dargestellt. Der Impulsauswerter 21, der grundsätzlich als Zählschaltung aufgebaut sein kann, läßt unter dem Einfluß von Steuersignalen auf Steuersignalleitungen $f_1$ und $f_2$ eine definierte Zahl von Taktimpulsen als Basis für eine weitere Impulsformung insbesondere zu einem Zeitmuster zu, wie dies beispielsweise in Fig. 2b dargestellt ist. Gemäß diesem Beispiel werden während einer Einschaltdauer TON, welche durch das Steuersignal auf der Steuersignalleitung $f_1$ bestimmt ist, die auf der Taktleitung $f_0$ ankommenden Impulse mit der Grundfrequenz gemäß Fig. 2a zur Weiterformung zum Zeitmuster zugelassen. Darauf folgt eine Pause TOFF, deren Dauer durch das Steuersignal auf Leitung $f_2$ bestimmt ist. Zu Beginn einer Periode TON wird vom Impulsauswerter 21 ein Synchronisier-Steuersignal SO an einen Impulsform-Speicher 24, z. B. eine EPROM, gegeben. Dieses Synchronisationssignal verursacht ein Speicher-RESET und veranlaßt den Abruf eines bestimmten gespeicherten zeitlichen Impulsformprogramms zum Aufbau des Zeitmusters. Im Impulsformspeicher 24 ist eine gewisse Anzahl derartiger Programme abgespeichert. Die Auswahl des Programms erfolgt mit Hilfe eines Auswahl-Steuersignals m, welches von einem an die Einrichtung angeschlossenen, nicht dargestellten Steuer- oder Servosystem geliefert wird. Über Steuerleitungen S1 und S2 wird der Impulsauswerter 21 entsprechend der ausgewählten Impulsform geschaltet. In Fig. 2 ist ein Beispiel eines solchen Impulsform-Zeitmusters gezeigt. Im Beispiel werden S1 = 3 Zeittakte zur Formung eines Einzelimpulses und S2 = 1 Zeittakt zur Formung eines Impulsintervalls verwendet. Das so zeitlich geformte Impulssignal wird über die Ausgangsleitung 22 des Impulsauswerters 21 einer verstärkenden Einheit 23 zugeführt.

Zur weiteren Formung der Amplituden der Impulse sind im Impulsform-Speicher 24 verschiedene Muster für den Amplitudenverlauf der Impulsgruppen abgespeichert. Vorzugsweise sind diese Amplitudenmuster mit den zeitlichen Mustern im Impulsformspeicher 24 verknüpft, so daß sie mit dem gleichen Steuersignal m abrufbar sind. Dies bedeutet, daß der Impulsformspeicher 24 aufgrund eines So-Steuersignals noch dem RESET ein Amplitudenmuster für die Stromamplituden auf die Ausgangsleitung 25 abgibt, wobei das Amplitudenmuster als Funktion der zeitlichen Impulsformsignale auf den Leitungen S1 und S2 erscheint. Dieses Amplitudenmuster wird in einem Verstärker 26 verstärkt und den zweiten elektronischen Schaltern 15 der parallel zueinander liegenden Leistungsschaltkreise zugeführt. Dabei wird eine solche Anzahl (1...n) von Listungsschaltkreisen angesteuert, daß die daraus jeweils entstehenden Summen von Impulsströmen die Amplituden des gewünschten Amplitudenmusters haben. In Fig. 2d ist als Beispiel ein solches Stromamplitudenmuster dargestellt, in welchem der zweite Impuls die doppelte Amplitude des ersten Impulses und der dritte Impuls die vierfache Amplitude des ersten Impulses aufweist.

Vorzugsweise läßt sich die Auswahl der an der Impulsformung beteiligten parallel liegenden Leistungsschaltkreise durch entsprechende Steuerung über die Leitung 25 derart gestalten, daß nach Art der Permutation die Einschaltphasen auf alle vorhandenen Leistungsschaltkreise möglichst gleichmäßig verteilt werden.

Damit wird eine gleichmäßige thermische Belastung der beteiligten Leistungsschaltkreise erreicht. Die Zahl dieser Schaltkreise ist daher vorzugsweise so gewählt, daß sie größer ist als die zur Erzeugung eines Impulsmusters maximal erforderliche Anzahl.

In Abweichung vom gezeigten Beispiel nach Fig. 2c können die zu einem Impulszug gehörenden Einzelimpulse auch unterschiedlich breit sein, wie dies in Fig. 3 angedeutet ist. Auch die Pausen zwischen den zu einem Impulszug gehörenden Einzelimpulsen können unterschiedlich gewählt sein. Schließlich können auch die Intervalle TOFF zwischen einzelnen Impulsgruppen variieren, sofern dies für das gewünschte Schneidverhalten je nach der geforderten Anwendung vorteilhaft ist.

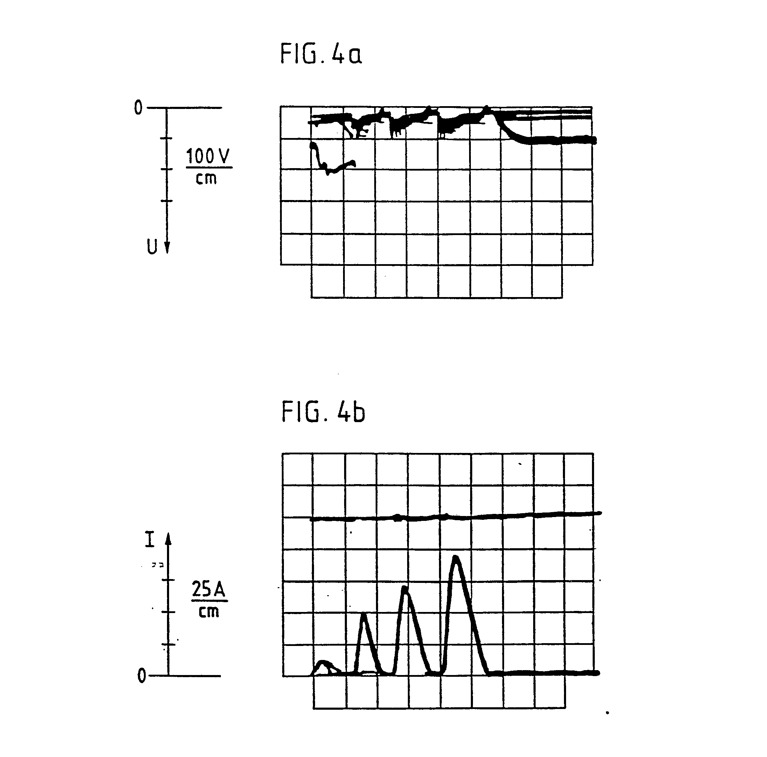

In Fig. 4a ist ein Spannungsoszillogramm und in Fig. 4b ein Stromoszillogramm einer aus jeweils vier Einzelimpulsen bestehenden Entladung am Bearbeitungsspalt 103 gemäß Fig. 1 dargestellt. Gemäss dem bevorzugten Beispiel (Anwendung zum Schneiden von Stahl) besteht die Stromimpulsfolge aus etwa dreieckförmigen, in der Amplitude ansteigenden Einzelimpulsen mit da zwischen liegenden etwa gleich langen Pausen. Der Spannungsverlauf nach Fig. 4a zeigt das Bild mehrerer übereinandergeschriebener Spannungskurven, also für mehrere auf einanderfolgende Entladungsvorgänge. Dabei zeigt sich für den ersten Impuls eine gewisse Leerlaufhäufigkeit, die jedoch für den zweiten und den dritten Impuls nicht mehr auftritt. Dies zeigt an, daß nicht alle Erstimpulse aufeinanderfolgender Entladungen mit absoluter Sicherheit zu einer Zündung führen. Dagegen treten bei den folgenden Impulsen keine Leerlaufspannungssignale mehr auf, woraus die hohe Wirksamkeit der Entladungen sichtbar ist. Die Entladungen finden alle in einem einzigen Entladekanal statt. Damit muß kein neuer Ionisationsstart mit hoher Zündspannung erfolgen.

Praktische Versuche haben erwiesen, daß sich mit solchen Impulsfolgen eine nennenswerte Steigerung der spezifischen Abtragrate erzielen läßt. Dies kann damit erklärt werden, daß der erste Startimpuls, auch wenn er nicht zu einer Entladung führt, durch die Wirkung der von ihm ausgehenden elektrischen Kräfte die Drahtelektrode im Bearbeitungsspalt in eine günstige Position zentriert. Dadurch können sich die folgenden Entladungen besonders wirksam ausbilden. Die Einzelimpulse einer Entladung bewirken dabei einen örtlich stark konzentrierten Abtrag, aufgrund ihrer zunehmenden Stromstärke aber auch zunehmende Abstoßkräfte, die gegen die Massenkräfte des Drahtes wirken. In den Impulspausen, in denen der Strom jedoch nicht unbedingt auf den Wert Null absinken muß, gehen die genannten Abstoßkräfte kurzzeitig zurück, wodurch sich eine präzisere Führung des Drahtes ergibt. Außerdem entsteht in den Impulspausen durch die Stromabsenkung ein Druckverlust im Entladekanal, der den Auswurf des abgetragenen Materials begünstigt. Der darauffolgende Impuls trifft dann eine saubere und bezüglich der elektrischen Bedingungen gleichmäßige Werkstückoberfläche an. Schließlich können wegen der so verbesserten Bedingungen und wegen der erhöhten Stromstärke auch größere Werkstücke einwandfrei bearbeitet werden.

## Patentansprüche

1. Verfahren zur Erzeugung einer elektroerosiven Entladespannung am Arbeitsspalt (103) einer elektroerosiven Drahtschneidemaschine (102), bei welchem
   a) an den Arbeitsspalt (103) eine Gleichspannung von aus Einzelimpulsen aufgebauten Impulsgruppen angelegt wird,
   b) die Einzelimpulse aus einer Takt-Impulsfolge ($f_0$) abgeleitet werden,
   c) zumindest einigen Einzelimpulsen unterschiedliche Stromamplituden und/oder Impulsbreiten aufprägbar sind, und
   d) die Impulsgruppe aus einem vorprogrammierten Zeitmuster aufgebaut wird, <u>dadurch gekennzeichnet</u>, daß
   e) zur Erzeugung jeder Impulsgruppe
   e.1) mehrere gleiche Teilgruppen von Einzelimpulsen mit gemeinsamem vorprogrammiertem Zeitmuster gleichzeitig nebeneinander erzeugt
   e.2) und Teile der hierdurch erhaltenen Teilgruppen nach einem vorprogrammierten Amplitudenmuster einander strommäßig überlagert werden.

2. Verfahren nach Anspruch 1, unter Verwendung einer elektroerosiven Drahtschneidanlage mit parallel geschalteten Leistungsschaltkreisen (11, 12, 15), von denen jeder zur Erzeugung einer Teilgruppe ausgelegt und deren Anzahl (a...n) größer als die zur Erzeugung eines Impulsmusters erforderliche Anzahl ist, dadurch gekennzeichnet, daß die Einschaltphasen der Leistungsschaltkreise (11, 12, 15) nach Art einer Permutation auf alle Leistungsschaltkreise (11, 12, 15) möglichst gleichmäßig verteilt werden.

3. Verfahren nach Anspruch 1 oder 2, dadurch gekennzeichnet, daß die Impulsgruppen aus Impulsen ansteigender Stromamplitude ($\hat{\imath}_1$, $\hat{\imath}_2$, $\hat{\imath}_3$) aufgebaut werden.

4. Elektroerosive Drahtschneidmaschine zur Durchführung des Verfahrens nach Anspruch 1 mit
   a) einem Gleichspannungs-Impulsgenerator, der aufweist
   a.1) einen Taktgeber (20) und
   a.2) eine Steuereinheit (21, 24) und eine nachgeschaltete, ausgangsseitig mit den elektrischen Anschlüssen (104, 105) des Arbeitsspaltes (103) verbundene Leistungseinheit (a...n, 11, 12, 15), die aus den Taktsignalen des Taktgebers (20) aufbauen:
- Einzelimpulse unterschiedlicher Stromamplitude und/oder Impulsbreite und daraus
- Impulsgruppen zur Erzeugung eines elektroerosiven Entladevorganges im Arbeitsspalt (103),
dadurch gekennzeichnet, daß
b) die Leistungseinheit (a...n, 11, 12, 15) aufweist: mehrere (a...n) zueinander parallel geschaltete und einzeln zur Erzeugung gleicher Teilgruppen von Einzelimpulsen ansteuerbare Leistungsschaltkreise (11, 12, 15), und
c) die Steuereinheit (11, 24) aufweist:
c.1) einen Impulsformspeicher (24),
c.2) eine erste Einrichtung, welche alle Leistungsschaltkreise (11, 12, 15) gleichzeitig zur Erzeugung der Teilgruppen derart ansteuert, daß die Teilgruppen ein vom Impulsformspeicher (24) gemeinsam vorgegebenes Zeitmuster aufweisen, und
c.3) eine zweite Einrichtung, welche die Leistungsschaltkreise (11, 12, 15) derart ansteuert, daß deren einzelne Ausgangssignale am Arbeitsspalt (103) zu einer resultierenden Impulsgruppe überlagert werden, die zusätzlich zum Zeitmuster ein vom Impulsformspeicher (24) vorgegebenes Stromamplitudenmuster ($\hat{i}_1$, $\hat{i}_2$, $\hat{i}_3$) aufweist.
5. Drahtschneidmaschine nach Anspruch 4, dadurch gekennzeichnet, daß
a) jeder Leistungsschaltkreis (11, 12, 15) an seinem einen Steuereingang einen nach dem Transformatorprinzip aufgebauten und im ungesättigten Bereich arbeitenden Impulsübertrager (11) aufweist,
b) die Primärseite (11a) des Impulsübertragers (11) mit dem Ausgang der ersten Einrichtung verbunden ist,
c) die Sekundärseite (11b, 11c) mittels eines steuerbaren ersten Schalters (Kurzschlußschalter 15) überbrückt ist und
d) der Steuereingang des ersten Schalters mit dem Steuerausgang der zweiten Einrichtung verbunden ist.
6. Drahtschneidmaschine nach Anspruch 5, dadurch gekennzeichnet, daß
a) die Sekundärseite (11b, 11c) zwei in Reihe geschaltete Sekundärwicklungen (11b, 11c) mit gleichem Wicklungssinn aufweist und
b) über eine Steuerspannungsquelle (2) und eine Diode (13) ein zweiter gesteuerter Schalter (12) dem ersten Schalter (15) parallel geschaltet ist,
c) wobei der Steuereingang des zweiten Schalters (12) mit der Mittelanzapfung der Sekundärwicklung (11b, 11c) verbunden ist.
7. Drahtschneidmaschine nach Anspruch 6, dadurch gekennzeichnet, daß der zweite Schalter (12) derart geschaltet ist, daß er bei Abschalten der der Primärwicklung (11a) zugeführten zeitgeformten Signale unmittelbar in den Sperrzustand übergeht.

8. Drahtschneidmaschine nach einem der Ansprüche 4 bis 7, dadurch gekennzeichnet, daß der Impulsformspeicher (24) zur Aufnahme mehrerer unterschiedlicher Stromamplitudenmuster ausgelegt und zur Ausgabe dieser Muster und musterkonformen Ansteuerung der Leistungsschaltkreise (11, 12, 15) über eine Steuerleitung (m) ansteuerbar ist.
9. Drahtschneidmaschine nach Anspruch 8, dadurch gekennzeichnet, daß der Impulsformspeicher (24) zur Aufnahme von mit den Stromamplitudenmustern verknüpften Zeitformmustern zur Formung der Impulsgruppen und Zuführung dieser Zeitformmuster an einen Impulsauswerter (21) in der ersten Einrichtung ausgelegt und der Ausgang des Impulsauswerters (21) mit der Primärwicklung (11 a) verbunden ist.

**Claims**

1. Method of generating an electro-erosion discharge voltage at the working gap (103) of an electro-erosion wire-cutting machine (102), in which
a) a d.c. voltage of pulse groups made up of individual pulses is applied to the working gap (103),
b) the individual pulses are derived from a clock pulse sequence ($f_0$),
c) different current amplitudes and/or pulse widths are able to be superposed on at least some individual pulses, and
d) the pulse group is based on a pre-programmed time sequence,
characterized in that
e) for generating each pulse group
e.1) several similar sub-groups of individual pulses with a common pre-programmed time sequence are generated concurrently,
e.2) and parts of sub-groups obtained in this way are superimposed on each other current-wise according to a pre-programmed amplitude pattern.
2. Method according to claim 1, using an electro-erosion wire-cutting installation with power switching circuits (11, 12, 15) connected in parallel, each of which is arranged to generate a sub-group and the number of which (a....n) is greater than the number required for generating a pulse pattern, characterized in that the operational phases of the power switching circuits (11, 12, 15) are distributed as evenly as possible according to a permutation of all power switching circuits (11, 12, 15).
3. Method according to claim 1 or 2, characterised in that the pulse groups are made up of pulses of increasing current amplitude ($\hat{i}_1$, $\hat{i}_2$, $\hat{i}_3$).
4. Electro-erosion wire-cutting machine, for carrying out the method according to claim 1, having
a) one d.c. voltage-pulse generator, which has

a.1) a clock generator (20) and

a.2) a control unit (21, 24) and a power unit (a...n, 11, 12, 15) connected thereafter to the electrical connections (104, 105) of the working gap (103) on the output side, which units form, from the clock signals of the clock generator (20):

- individual pulses of different current amplitude and or pulse width and from these

- pulse groups for generating an electro-erosion discharge process in the working gap (103),

characterized in that

b) the power unit (a...n, 11, 12, 15) has several (a...n) power switching circuits (11, 12, 15) connected in parallel to each other and individually controllable for generation of similar sub-groups of individual pulses, and

c) the control unit (11, 24) has:

c.1) a pulse form memory (24),

c.2) a first device, which simultaneously controls all power switching circuits (11, 12, 15) for generating the sub-groups in such a way that the sub-groups have a common time sequence preset by the pulse form memory (24), and

c.3) a second device, which controls the power switching circuits (11, 12, 15) in such a way that the individual output signals thereof at the working gap (103) are superimposed to give a resulting pulse group, which has, in addition to the time sequence, a current, amplitude pattern $(\hat{i}_1, \hat{i}_2, \hat{i}_3)$ preset by the pulse form memory (24).

5. Wire-cutting machine according to claim 4, characterised in that

a) each power switching circuit (11, 12, 15) has on one of its control inputs a pulse transformer (11) constructed according to the transformer principle and operating in the unsaturated region,

b) the primary side (11a) of the pulse transformer (11) is connected to the output of the first device,

c) the secondary side (11b, 11c) is bridged by means of a controllable first switch (short-circuit switch 15), and

d) the control input of the first switch is connected with the control output of the second device.

6. Wire-cutting machine according to claim 5, characterized in that

a) the secondary side (11b, 11c) has two secondary windings (11b, 11c) connected in series with the same winding sense and

b) a second controlled switch (12) is connected in parallel to the first switch (15) by way of a control voltage source (2) and a diode (13),

c) wherein the control input of the second switch (12) is connected to the centre tap of the secondary winding (11b, 11c).

7. Wire-cutting machine according to claim 6, characterized in that the second switch (12) is connected in such a way that it enters directly into the off-state when the time-formed signals supplied to the primary winding (11a) are disconnected.

8. Wire-cutting machine according to one of claims 4 to 7, characterized in that the pulse form memory (24), is arranged to receive several different current amplitude patterns and is controllable by way of a control line (m) to output these patterns and to control the power switching circuits (11, 12, 15) in a pattern-conforming manner.

9. Wire-cutting machine according to claim 8, characterized in that the pulse form memory (24) is arranged to receive time shape patterns, associated with the current amplitude patterns, for forming the pulse groups and to supply these time shape patterns to a pulse evaluator (21) in the first device and the output of the pulse evaluator (21) is connected to the primary winding (11a).

**Revendications**

1. Procédé de production d'une tension de décharge électroérosive dans une fenêtre de travail (103) d'une machine de coupe par électroérosion à fil (102) sur laquelle

a) dans la fenêtre de travail (103) est appliquée une tension continue à partir d'un train d'impulsions formé d'impulsions individuelles,

b) les impulsions individuelles dérivent d'un train d'impulsions de cadencement $(f_0)$,

c) au moins un certain nombre d'impulsions individuelles peuvent présenter des amplitudes d'intensité et/ou des largeurs d'impulsions différentes, et

d) les groupes d'impulsions sont constitués à partir d'une base de temps préprogrammée, caractérisé en ce que

e) pour la production de chaque groupe d'impulsions

e.1) plusieurs groupes partiels identiques d'impulsions individuelles sont engendrés simultanément les uns à côté des autres avec une base de temps commune préprogrammée,

e.2) et des parties des groupes partiels d'impulsions ainsi obtenus sont superposées l'une à l'autre en intensité selon un modèle d'amplitudes préprogrammé.

2. Procédé selon la revendication 1, avec utilisation d'une installation de coupe par fil par électroérosion comportant des circuits de commutation de puissance (11, 12, 15) connectés en parallèle à partir desquels chacun est utilisé pour l'obtention d'un groupe partiel, et dont le nombre (a...n) est supérieur à celui qui est nécessaire à la production d'un modèle d'impulsions, caractérisé en ce que les phases de connexion des circuits de commutation de puissance (11, 12, 15) sont réparties de la façon la plus homogène possible selon une technique de permutation de tous les circuits de commutation de puissance (11, 12, 15).

3. Procédé selon la revendication 1 ou 2, caractérisé en ce que les groupes d'impulsions sont élaborés à partir d'impulsions d'amplitude d'intensité croissante $(\hat{i}_1, \hat{i}_2, \hat{i}_3)$.

4. Machine de coupe par fil par électroérosion pour la mise en oeuvre du procédé selon la revendication 1, comprenant:

a) un générateur d'impulsions à tension continue qui comporte

a.1) une horloge (20) et

a.2) un ensemble de commande (21, 24) et un ensemble de puissance (a...n, 11, 12, 15) intercalé en série, lié du côté sortie aux connexions électriques (104, 105) de la fenêtre de travail (103) qui élaborent à partir des signaux de cadencement de l'horloge (20)

- des impulsions individuelles d'amplitude d'intensité et/ou de largeur d'impulsions différentes, et de là

- des groupes d'impulsions pour la production d'un processus de décharge électroérosive dans la fenêtre de travail (103),

caractérisée en ce que

b) l'ensemble de puissance (a...n, 11, 12, 15) comporte plusieurs (a...n) circuits de commutation de puissance montés en parallèle et excitables par des inpulsions individuelles en particulier pour produire des groupes partiels identiques,

c) l'ensemble de commande (11, 24) comporte

c.1) un accumulateur de formes d'impulsions

c.2) un premier dispositif qui excite tous les circuits de commutation de puissance (11, 12, 15) pour la production de groupes partiels de façon à ce que ceux-ci présentent une constante de temps préformée commune à partir de l'accumulateur de formes d'impulsions (24), et

c.3) un second dispositif qui excite les circuits de commutation de puissance (11, 12, 15) de sorte qu'à des groupes d'impulsions obtenus se superposent aux signaux de sortie individuels dans la fenêtre de travail (103) qui comprend en plus de la base de temps un modèle d'amplitude d'intensité ($\hat{i}_1$, $\hat{i}_2$, $\hat{i}_3$) prédéterminé à partir de l'accumulateur de formes d'impulsions (24).

5. Machine de coupe par fil selon la revendication 4, caractérisée en ce que

a) chaque circuit de commutation de puissance (11, 12, 15) comporte à l'une de ses extrémités d'entrée de commande, un élément de transmission d'impulsions conçu sur le principe du transformateur et travaillant dans la zone insaturée,

b) le côté primaire (11a) de l'élément de transmission d'impulsions (11) est relié à la sortie du premier dispositif,

c) le côté secondaire (11b, 11c) est shunté au moyen d'un premier commutateur commandable (commutateur de court-circuit 15) et

d) l'entrée de commande du premier commutateur est reliée à la sortie de commande du second dispositif.

6. Machine de coupe par fil selon la revendication 5, caractérisée en ce que

a) le côté secondaire (11b, 11c) comporte deux enroulements secondaires (11b, 11c) branchés en serie avec le même sens de bobinage, et

b) un second commutateur commandé (12) est branché en parallèle au premier commutateur (15) par l'intermediaire d'une source de courant (2) et d'une diode (13),

c) l'entrée de commande du second commutateur (12) étant reliée à la prise centrale de l'enroulement secondaire (11b, 11c).

7. Machine de coupe par fil selon la revendication 6, caractérisée en ce que le deuxième commutateur (12) est branché de façon telle qu'il courtcircuite par mise hors circuit de l'enroulement primaire (11a) les signaux de temps fournis immédiatement à l'état bloqué.

8. Machine de coupe par fil selon l'une des revendications 4 à 7, caractérisée en ce que l'accumulateur de formes d'impulsions (24) est conçu pour recevoir plusieurs modèles d'amplitude d'intensité différents et pour restituer ces modèles et l'excitation des circuits de commutation de puissance (11, 12, 15) conforme à ces modèles peut être commandé par une ligne de commande m.

9. Machine de coupe par fil selon la revendication 8, caractérisée en ce que l'accumulateur de formes d'impulsions (24) pour la réception de base de temps relié aux modèles d'amplitude de courant pour la mise en forme des groupes d'impulsions et l'amenée de cette base de temps sur un transformateur d'impulsions (21) est introduite dans le premier dispositif, et la sortie du transformateur d'impulsions (21) est reliée à l'enroulement primaire (11a).

FIG. 1

FIG. 2

FIG. 3

## FIG. 4a

0

$\dfrac{100\,V}{cm}$

U

## FIG. 4b

I

$\dfrac{25A}{cm}$

0